# EUROPEAN PATENT APPLICATION

(11) **EP 1 270 173 A1**
(43) Date of publication of application: **02.01.2003**
(21) Application number: 01127828.0
(22) Date of filing: 22.11.2001
(51) Int. Cl.: B29C 47/02, B29C 53/12, B29C 71/02

(54) **Resiliently extensible flexible coiled hose and method therefor**

(30) Priority: 20.06.2001 IT MI011301
(71) Applicant: Tamborini, Ariberto, 21020 Daverio (Varese) (IT); Tamborini, Giancarlo, 21020 Daverio (Varese) (IT)
(72) Inventor: Tamborini, Ariberto, 21020 Daverio (Varese) (IT); Tamborini, Giancarlo, 21020 Daverio (Varese) (IT)
(74) Representative: Cicogna, Franco

(57) **Abstract**

The present invention relates to a resiliently extensible coiled hose (1), comprising a plastics material tubular element in which is embedded a reinforcement element comprising a coiled metal wire (3).

The tubular element is designed for assuming a spiral arrangement, allowing the coiled hose (1) to be resiliently elongated.

## Description

### BACKGROUND OF THE INVENTION

The present invention relates to a resiliently extensible flexible coiled hose, and a method for making it.

As is known, conventional used hoses for showers and the like, comprise a metal or plastics material pipe element, having a variable length depending on its applications and usually having a comparatively great size which is very objectable, mainly in a case in which the hose is used in a comparatively small size shower cabinet.

Moreover, prior shower hoses are affected by the problem that, if the shower handle is detached from its support element, then it could violently impact against the shower bottom or underlaying basin tub, with a consequent possible damage thereof.

### SUMMARY OF THE INVENTION

Accordingly, the aim of the present invention is to overcome the above mentioned drawbacks, by providing a resiliently extensible flexible coiled hose, and a method for making it, allowing to provide a compactedly sized hose, and having a useful length which can be extended up to seven times its starting length.

Within the above mentioned aim, a main object of the present invention is to provide a coiled flexible hose, allowing the shower element, coupled through the hose, to be left in a suspended condition, without any risks of damaging elements.

Another object of the present invention is to provide such a coiled flexible hose which, owing to its specifically designed constructional features, is very reliable and safe in operation.

Yet another object of the present invention is to provide such a resiliently extensible flexible coiled hose which can be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by a resiliently extensible flexible coiled hose, characterized in that said hose comprises a plastics material tubular element in which is embedded a reinforcement element comprising a metal coiled wire and that said tubular element is designed for assuming a spiral arrangement allowing said coiled hose to be resiliently elongated.

### BRIEF DESCRIPTION OF THE DRAWINGS

Further characteristics and advantages of the present invention will become more apparent hereinafter from the following detailed disclosure of the preferred, though not exclusive, embodiment of a resiliently extensible flexible coiled hose, which is illustrated, by way of an indicative but not limitative example, in the figures of the accompanying drawings, where:
Figure 1 is a schematic view illustrating the coiled hose according to the present invention, applied to a shower;
Figure 2 is a further view of the coiled hose according to the present invention, with an end fitting thereof, as represented in exploded form;
Figure 3 schematically illustrates a tubular element, preferably made of a polyurethane or nylon material, made by extruding;
Figure 4 is a schematic view illustrating an operating step for winding a coiled metal wire on the mentioned tubular element;
Figure 5 is a schematic view illustrating the subject tubular element, including a metal spiral arrangement thereof, after the application to it of a further plastics material coating element, designed for coating the metal spiral arrangement and first tubular element; and
Figure 6 schematically shows a further operating step in which the hose, upon cutting to a desired size, is wound on a mandrel to provide it with an end spiral configuration.

### DESCRIPTION OF THE PREFERRED EMBODIMENTS

With reference to the number references of the above mentioned figures, the resiliently extensible flexible coiled hose according to the present invention, which has been generally indicated by the reference number 1, is advantageously constituted by a tubular element 2, made of any desired plastics material, preferably nylon or other thermoformable material, such as polyurethane or the like.

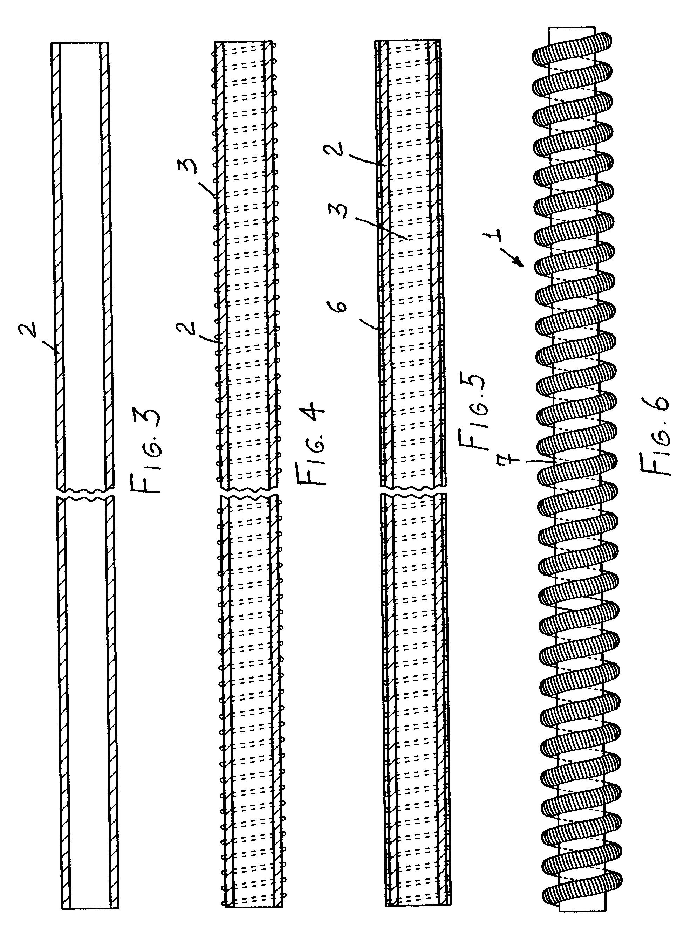

Then, by a coiling or spiralling machine, on the tubular element 2 a metal coil 3, or spiral arrangement, clearly shown in figure 3, is wound.

The making method moreover provides the application of a further plastics material coating (nylon, polyurethane or other thermoformable materials), made by a conventional extruding method and which is applied so as to coat the metal coil and first tubular element.

At the end of the mentioned second coextruding process, is obtained a pipe including a tubular element 2, thereon a metal coil 3 and an outer coating 6 are arranged.

The thus obtained type of hose has still a rectilinear configuration, and is cut to present a desired size.

Then, said pipe, wound on a mandrel 7, is conveyed to a heated oven and assumes, after a cooling step, a final or end spiral arrangement, and being removed from the mandrel.

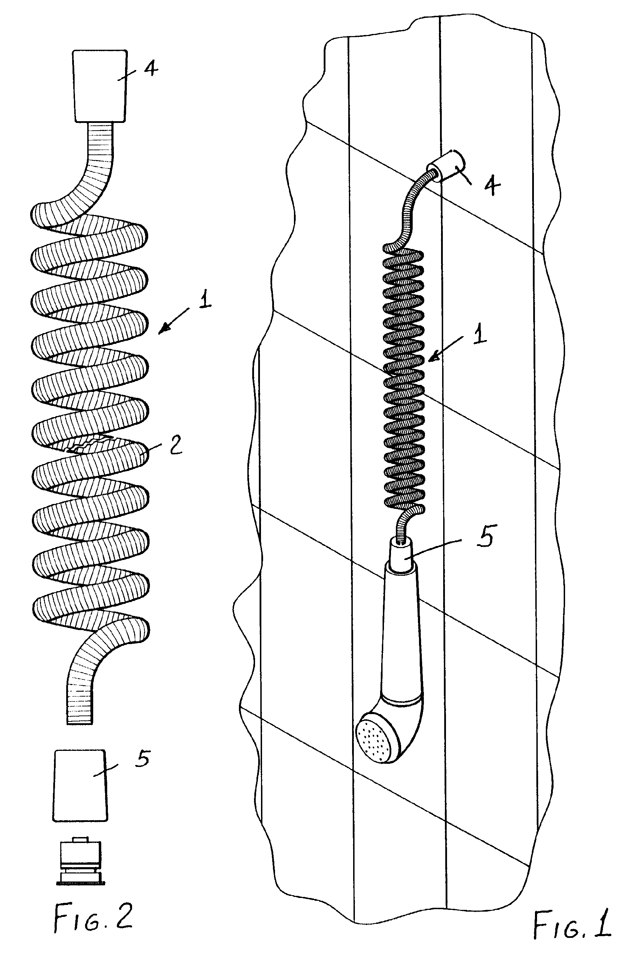

After the above mentioned operating steps, the article of manufacture 1 will assume a coiled or spiral configuration, as clearly shown in figures 1 and 2.

The thus made tube 1 can be then coupled by using mechanical fittings 4 and 5 or by over-molding, and can be provided with suitable threaded ring nuts.

The coiled arrangement or configuration of said tube provides a very compact tube arrangement, which, if necessary, can be extended to at least five-seven times its starting length.

In this connection it should be pointed out that the elongation ratio will be directly proportional to the pipe diameter, its starting length and winding diameter.

From the above disclosure it should be apparent that the invention fully achieves the intended aim and objects.

In particular, a coiled hose 1 has been provided which can be easily extended and is adapted to properly resist against any resilient elongation efforts, without causing any operating problems.

The invention, as disclosed, is susceptible to several modifications and variations, all of which will come within the scope of the inventive idea.

Moreover, all of the constructional details can be replaced by other technically equivalent elements.

In practicing the invention, the used materials, as well as the contingent size and shapes, can be any, depending on requirements.

## Claims

1. A resiliently extensible flexible coiled hose, **characterized in that** said hose comprises a plastics material tubular element (2) made by extruding without mandrel and of a nylon, polyurethane or other thermoformable materials, said hose including a metal coil (3) wound on said tubular element (2).

2. An extensible flexible coiled hose, according to Claim 1, **characterized in that** said tubular element (2) comprises a further plastics material coating layer (6) including nylon, polyurethane or other thermoformable materials, made by any conventional extruding process, coating said metal coil (3) and first tubular element (2).

3. An extensible flexible coiled hose, according to one or more of the preceding claims, **characterized in that** said tubular element (2) comprises a tubular member on which is arranged a metal coil or spiral arrangement (3) and an outer coating (6) of a plastics material and having a rectilinear arrangement.

4. An extensible flexible coiled hose, according to the preceding claims, **characterized in that** said tubular member is cut to any desired size and is spiral wound on a mandrel (7) to provide said hose with a final coil or spiral-like arrangement.

5. A method for making a resiliently extensible flexible coiled hose, according to one or more of the preceding claims, **characterized in that** said method comprises a step of making a plastics material tubular element by an extruding process, by using nylon, polyurethane or other thermoformable materials.

6. A method according to Claim 5, **characterized in that** said method comprises a step of winding on said tubular element (2) a metal coil, by using a spiralling winding machine.

7. A method according to Claims 5 and 6, **characterized in that** said method comprises a step of performing a coextruding operation by applying on said tubular element, coated by a spiral metal wire, a second plastics material coating layer, preferably of nylon, polyurethane or any other thermoformable material.

8. A method according to Claims 5 to 7, **characterized in that** said second coextruding step provides said tubular element including a coiled metal wire with a plastics material layer.

9. A method for making an extensible flexible coiled hose, according to one or more of the preceding claims, **characterized in that** said hose, which comprises a plurality of layers, is wound on a mandrel and heated in an oven.

10. A method for making an extensible flexible coiled hose, according to one or more of the preceding claims, **characterized in that** said tubular element is withdrawn from said oven, said mandrel is withdrawn therefrom, and is cooled thereby assuming a spiral or coiled arrangement.
